Europäisches Patentamt

European Patent Office

Office européen des brevets

(11) Veröffentlichungsnummer: **0 198 203**
B1

## (12) EUROPÄISCHE PATENTSCHRIFT

(45) Veröffentlichungstag der Patentschrift:
07.06.89

(21) Anmeldenummer: 86103039.3

(22) Anmeldetag: 07.03.86

(51) Int. Cl.⁴: **H04Q 11/04**, H04M 3/24,
H04Q 1/24

(54) **Verfahren zur Durchschalteprüfung einer Breitband-Koppeleinrichtung.**

(30) Priorität: 08.03.85 DE 3508402

(43) Veröffentlichungstag der Anmeldung:
22.10.86 Patentblatt 86/43

(45) Bekanntmachung des Hinweises auf die Patenterteilung:
07.06.89 Patentblatt 89/23

(84) Benannte Vertragsstaaten:
AT BE CH DE FR GB IT LI NL SE

(56) Entgegenhaltungen:
EP-A- 0 163 288
FR-A- 2 252 711
FR-A- 2 252 718
FR-A- 2 509 944
US-A- 4 500 985

PROCEEDINGS OF THE INTERNATIONAL SWITCHING
SYMPOSIUM, 7.-11. 2ai 1984, Florenz, IT, Teil 2,
"session" 32C, Papier 3, Seiten 1-5, North-Holland
Publishing Co., Amsterdam, NL; CHARDON et al.: "A
picturephone broadband switching network"
PROCEEDINGS OF THE INTERNATIONAL SWITCHING
SYMPOSIUM, 21.-26. September 1981, Montreal, CA,
"session 21B", Papier 5, Seiten 1-7; R.E. CARDWELL et
al.: "Experimental wideband switching system
capability"

(73) Patentinhaber: Siemens Aktiengesellschaft Berlin und
München, Wittelsbacherplatz 2, D-8000 München 2(DE)

(72) Erfinder: Appelmann, Wolfgang, Dipl.-Ing.,
Ringstrasse 1, D-8000 München 70(DE)
Erfinder: Thoma, Wolfgang, Dr.-Ing., Rueppstrasse 34,
D-8000 München 71(DE)

ACTORUM AG

**Beschreibung**

In Fernmeldevermittlungsanlagen besteht neben deren Hauptaufgabe, Leitungsanschlüsse für einen exklusiven Nachrichtenaustausch zeitweilig miteinander zu verbinden, zugleich die Nebenaufgabe, fehlerhafte Verbindungen, insbesondere zwischen zwei bereits miteinander verbundenen Leitungsanschlüssen und einem dritten Leitungsanschluß (sog. Doppelverbindungen), zu vermeiden. Insbesondere in Breitband-Koppeleinrichtungen für Bildkommunikation kennt man außer steuerungsfehlerbedingten Fehlverbindungen auch Fehlverbindungen, die durch Nebensprecheffekte hervorgerufen werden. Nachdem solche Fehlverbindungen sporadisch auftreten können, müssen sie, um nachteilige Störungen vermeiden zu können, sehr schnell erkannt werden.

Um Fehlverbindungen in Vermittlungsanlagen festzustellen, unterzieht man deren Koppeleinrichtungen sogenannten Durchschalteprüfungen.

So hat man zur Durchschalteprüfung einer Breitband-Koppeleinrichtung, über die Bildfernsprechsignale durchgeschaltet werden, vorgesehen, daß jeweils nach einer Verbindungsdurchschaltung bei dem jeweils einen an der betreffenden Verbindung beteiligten Leitungsanschluß der Koppeleinrichtung ein Pilotsignal eingespeist wird und dann geprüft wird, ob dieses Pilotsignal nur zu dem jeweils anderen an der betreffenden Verbindung beteiligten Leitungsanschluß der Koppeleinrichtung (und zu keinem weiteren Anschluß) gelangt. Auf diese Art und Weise ist es an sich möglich, jede neu geschaltete Verbindung auf Durchschaltung und Doppelverbindung zu überprüfen; das Verfahren führt indessen wegen der jeweils erforderlichen Abfrage aller Leitungsanschlüsse schnell zu relativ großen Rechnerbelastungen und Verarbeitungszeiten, so daß es nur für sehr kleine Vermittlungsanlagen praktikabel ist.

Es ist auch schon vorgeschlagen worden (siehe EP-A-0 163 288, veröffentlicht am 04.12.85), zur Durchschalteprüfung einer Raummultiplex-Koppeleinrichtung durch verbindungsindividuelles eingangsseitiges Einspeisen und ausgangsseitiges Auswerten einer Prüfinformation in der Weise zu verfahren,

daß die Prüfinformation jeweils eine den für die betreffende Verbindung benutzten Eingang der Koppeleinrichtung kennzeichnende Absenderadresse sowie eine den zu benutzenden Ausgang der Koppeleinrichtung kennzeichnende Zieladresse umfaßt und empfangsseitig mit den durch diese Adressen gebildeten Verbindungsdaten verglichen wird, wobei in einem Fernmeldesystem, bei dem auf den durch die Raummultiplex-Koppeleinrichtung zu verbindenden Leitungen in periodisch sich wiederholenden Zeitspannen außer der durchzuschaltenden Nutzinformation auch der Signalisierung, Steuerung und Synchronisierung dienende Betriebsinformationen übertragen werden,

entweder die Prüfinformationen nur während des Verbindungsaufbaues in den für die Nutzinformationen vorgesehenen Zeitspannen übertragen werden und empfangsseitig einmalig ein Vergleich mit den gespeicherten Einstellinformationen vorgenommen wird

oder aber die Prüfinformation während der gesamten Dauer einer Verbindung anstelle einer der Betriebsinformationen, die eingangs der Raummultiplex-Koppeleinrichtung ausgeblendet und ggfs. ausgangs der Raummultiplex-Koppeleinrichtung wieder zugeführt werden, in den für diese Betriebsinformationen vorgesehenen Zeitspannen über die Raummultiplex-Koppeleinrichtung übertragen werden und empfangsseitig periodisch ein Vergleich mit den gespeicherten Einstellinformationen vorgenommen wird;

der dabei jeweils mit einer der betreffenden Ausgangsleitung individuell zugeordneten Einrichtung vorgenommene empfangsseitige Vergleich bedingt eine entsprechende empfangsseitige Verfügbarkeit der Verbindungsadressen, was einen entsprechenden Datenaustausch zwischen einer übergeordneten Einrichtung und den vielen Ein- und Ausgängen der Koppeleinrichtung voraussetzt, der eine Vielzahl von Datenverbindungsleitungen in der Vermittlung erfordern kann.

Die Erfindung stellt sich nun die Aufgabe, ein Verfahren zur Durchschalteprüfung einer Breitband-Koppeleinrichtung anzugeben, das ohne einen Datenaustausch über besondere Leitungen zwischen den übergeordneten Einrichtungen und den einzelnen Ein- und Ausgängen der Breitband-Koppeleinrichtung auskommt.

Die Erfindung betrifft ein Verfahren zur Durchschalteprüfung einer Breitband-Koppeleinrichtung unter verbindungsindividuellem eingangsseitigen Einspeisen und ausgangsseitigen Auswerten eines eine den Koppeleinrichtungs-Eingang bezeichnende Adresse enthaltenden Prüfsignals; dieses Verfahren ist erfindungsgemäß dadurch gekennzeichnet, daß in einem diensteintegrierenden Telekommunikationssystem mit getrennten Koppeleinrichtungen für Schmalband- und für Breitbanddienste in jeder an einer Breitbandverbindung beteiligten Anschlußleitung Durchschalteprüfsignale, die jeweils die Adresse eben dieser Anschlußschaltung sowie die in von der Gegenseite her empfangenen entsprechenden Durchschalteprüfsignalen etwa enthaltene Adresse der Gegen-Anschlußschaltung enthalten, in die Schmalbandsignallücken des Breitbandsignals eingefügt werden und daß die über die Breitband-Koppeleinrichtung durchvermittelte Breitbandsignale einzeln auch zu einem ebenfalls an die Breitband-Koppeleinrichtung angeschlossenen Prüfanschluß durchgeschaltet werden, der den Breitbandsignalen das darin enthaltene Durchschalteprüfsignal entnimmt und an einen durch Vergleich der Adressen von Anschlußschaltung und Gegen-Anschlußschaltung mit der Koppelfeld-Einstellung die Richtigkeit der bestehenden Verbindung feststellenden Vermittlungsprozessor weiterleitet.

Die Erfindung bringt den Vorteil mit sich, daß besondere Datenleitungen zwischen den Anschlußschaltungen und dem Vermittlungsprozessor für die Durchschalteprüfung nicht benötigt werden, ein damit sonst verbundener Aufwand also entfallen kann.

Der Prüfanschluß kann dabei vom zugehörigen Vermittlungsprozessor zyklisch oder auch von Fall zu Fall gezielt durch entsprechende Einstellung der Koppeleinrichtung an die einzelnen Leitungsanschlüsse angeschaltet werden. Der Vermittlungsprozessor kann damit feststellen, welche Leitungsanschlüsse ggf. an einer Fehlverbindung beteiligt sind, und kann dann eine entsprechende Störungsinformation zur Anzeige bringen und auch selbst durch Auslösen der betroffenen Verbindungen reagieren. Dabei können in weiterer Ausgestaltung der Erfindung mit den Durchschalteprüfsignalen zusätzliche, ebenfalls in dem Breitbandsignal enthaltene Meldebits zum Prüfanschluß übertragen werden, die der Prüfanschluß dann auswerten und zum Vermittlungsprozessor weiterleiten kann.

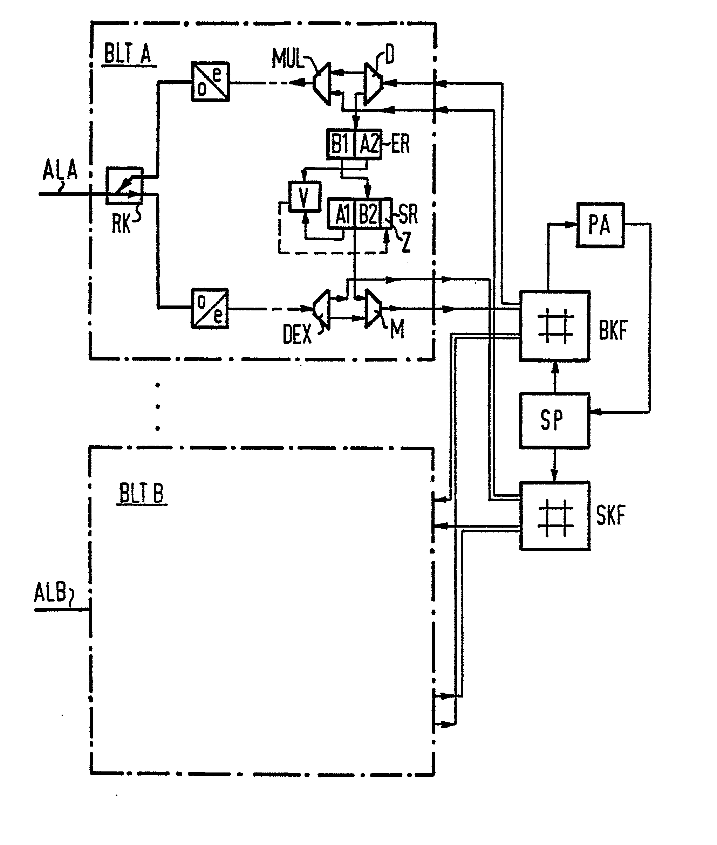

Weitere Besonderheiten der Erfindung werden aus deren nachfolgender näherer Erläuterung an Hand der Zeichnung ersichtlich.

In der Zeichnung ist schematisch in einem zum Verständnis der Erfindung erforderlichen Umfang ein Ausführungsbeispiel eines diensteintegrierenden Telekommunikationssystems mit einer von einem Vermittlungsprozessor SP gesteuerten Schmalbandkoppeleinrichtung SKF und einer gesonderten, vorzugsweise von demselben Vermittlungsprozessor SP gesteuerten Breitbandkoppeleinrichtung BKF dargestellt, an die zu Teilnehmerstationen oder auch zu anderen Vermittlungseinrichtungen führende Lichtwellenleiter-Anschlußleitungen AL A,...,AL B jeweilss über eine Anschlußschaltung BLT A,...,BLT B angeschlossen sind. Aus der die Anschlußschaltung BLT A näher in schaltungstechnischen Einzelheiten zeigenden Zeichnung wird dabei ersichtlich, daß die - dann einfaserige - Lichtwellenleiter-Anschlußleitung AL in der Anschlußschaltung BLT über einen Lichtwellenleiter-Richtungskoppler RK mit dem Ausgang eines elektro/optischen Wandlers e/o und mit dem Eingang eines opto/elektrischen Wandlers o/e verbunden sein kann. Mit dem Eingang des elektro/optischen Wandlers e/o ist der Ausgang eines Multiplexers MUL verbunden, der über die Schmalbandkoppeleinrichtung SKF durchvermittelte Schmalband-Digitalsignale (z.B. 64-kbit/-Fernsprechsignale) und über die Breitbandkoppeleinrichtung BKF durchvermittelte Breitbandsignale (Bildfernsprechsignale) sowie (z.B. 8-kbit/s-)Steuersignale und Synchronisiersignale zu einem über die Lichtwellenleiter-Anschlußleitung AL zu übertragenden Multiplexsignal, beispielsweise einem 140-Mbit/s- oder 34-Mbit/s-Zeitmultiplexsignal, zusammenfaßt. Ein in der umgekehrten Übertragungsrichtung über die Lichtwellenleiter-Anschlußleitung AL übertragenes Multiplexsignal, insbesondere Zeitmultiplexsignal, wird in einem dem opto/elektrischen Wandler o/e nachgeschalteten Demultiplexer DEX in die entsprechenden Einzelsignale, beispielsweise in (z.B. 8-kbit/s-)Steuersignale, Synchronisiersignale, über die Schmalbandkoppeleinrichtung SKF durchzuvermittelnde (z.B. 64-kbit/s-Fernsprech-) Schmalband-Digitalsignale und ein über die Breitbandkoppeleinrichtung BKF durchzuschaltendes Breitbandsignal (Bildfernsprechsignal), aufgefächert.

In die bei dieser Auffächerung entstehenden Schmalbandsignallücken des Breitbandsignals werden nun in jeder an einer Breitbandverbindung beteiligten Anschlußschaltung BLT während der ganzen Verbindungsdauer Durchschalteprüfsignale eingefügt, die jeweils die Adresse eben dieser Anschlußschaltung BLT sowie ggf. die in von der Gegenseite her über die Breitbandkoppeleinrichtung BKF empfangenen entsprechenden Durchschalteprüfsignalen etwa enthaltene Adresse einer Gegen-Anschlußschaltung enthalten. Wie aus der Zeichnung ersichtlich wird, kann dazu in jeder Anschlußschaltung BLT ein Senderegister SR vorgesehen sein, in dessen ersten Registerteil A1 ständig die Adresse eben dieser Anschlußschaltung stehen möge und in dessen zweiten Registerteil B2 ggf. die empfangene Adresse einer Gegen-Anschlußschaltung eingegeben wird; ausgangsseitig führt das Senderegister SR zu einem entsprechenden Eingang eines Multiplexers M, der zwischen den Demultiplexer DEX und die Breitbandkoppeleinrichtung BKF eingefügt ist, so daß er das vom Senderegister SR jeweils abgegebene Durchschalteprüfsignal in eine Schmalbandsignallücke des Breitbandsignals einfügt.

Es sei hier bemerkt, daß die Erfindung auch dann Anwendung finden kann, wenn auf der Anmeldeleitung AL kein Schmalbandsignal übertragen wird und die entsprechende Übertragungskapazität auf der Anschlußleitung ungenutzt bleibt.

Im umgekehrt gerichteten Signalweg ist zwischen die Breitbandkoppeleinrichtung BKF und den Multiplexer MUL ein Demultiplexer D eingefügt, der solche von einer mit der gerade betrachteten Anschlußleitung BLT A über die Breitbandkoppeleinrichtung BKF gerade verbundenen anderen Anschlußschaltung in das Breitbandsignal eingefügte Durchschalteprüfsignale ausblendet und einem Empfangsregister ER zuführt. Dessen erster Registerteil B1, der ggf. die in einem solchen Durchschalteprüfsignal enthaltene Adresse einer mit der gerade betrachteten Anschlußschaltung BLT A über die Breitbandkoppeleinrichtung BKF gerade verbundenen Gegen-Anschlußschaltung, beispielsweise der in gleicher Weise aufgebauten Anschlußschaltung BLT B, aufnimmt, ist mit dem Senderegisterteil B2 verbunden, so daß die in in der Anschlußschaltung BLT A empfangenen Durchschalteprüfsignalen enthaltene Adresse der Gegen-Anschlußschaltung (BLT B) in diesen Senderegisterteil B2 gelangt und dann, wie schon erwähnt, in den nachfolgend von der gerade betrachteten Anschlußschaltung BLT A abzugebenden Durchschalteprüfsignalen an die Adresse eben dieser Anschlußschaltung BLT A angefügt und damit zur Gegen-Anschlußschaltung (BLT B) zurückübertragen wird.

In entsprechender Weise wird, ohne daß dies in der Zeichnung noch näher verdeutlicht ist, in der im Beispiel gerade mit der Anschlußschaltung BLT A über die Breitbandkoppeleinrichtung BKF verbundenen Anschlußschaltung BLT B die in den dort von der Anschlußschaltung BLT A her empfangenen Durchschalteprüfsignalen enthaltene Adresse der Anschlußschaltung BLT A in den von der Anschlußschaltung BLT B ausgesendeten Durchschalteprüfsignalen gewissermaßen reflektiert. Die reflektierte Adresse gelangt dann bei Empfang dieser Durchschaltesignale in der Anschlußschaltung BLT A in deren Empfangsregisterteil A2.

Die Durchschalteprüfsignale werden zu einem Prüfanschluß PA durchgeschaltet, der, wie dies in der Zeichnung angedeutet ist, ebenfalls an die Breitbandkoppeleinrichtung BKF angeschlossen ist und der in der Breitbandkoppeleinrichtung BKF, vom Vermittlungsprozessor SP gesteuert, zyklisch oder auch von Fall zu Fall gezielt auf bestehende Verbindungen aufgeschaltet oder auch an einzelne Leitungsanschlüsse BLT angeschaltet wird. Dazu wird die Breitband-Koppeleinrichtung vom Vermittlungsprozessor so eingestellt, daß das von einem Anschluß in die Breitband-Koppeleinrichtung gesendete Breitbandsignal nicht nur dem Gegenanschluß, sondern auch dem Prüfanschluß zugeführt wird. Dieser Prüfanschluß PA leitet die empfangenen Durchschalteprüfsignale an den Vermittlungsprozessor SP weiter, so daß dieser anhand der jeweiligen Einstellung der Breitbandkoppeleinrichtung BKF Fehlverbindungen und insbesondere etwaige Fehleinstellungen der Breitbandkoppeleinrichtung BKF auch lokalisieren kann.

Dabei können von den Leitungsanschlüssen BLT innerhalb des Breitbandsignales mit den Durchschalteprüfsignalen auch zusätzliche Meldebits zum Prüfanschluß PA hin ausgesendet werden, die dann ebenfalls im Prüfanschluß PA ausgewertet bzw. an den Vermittlungsprozessor SP weitergeleitet werden können. In der Zeichnung ist dazu angedeutet, daß das in jeder Anschlußschaltung (BLT A) vorgesehene Senderegister SR einen zusätzlichen Registerplatz Z aufweist, so daß auch darin stehende Meldebits mit dem jeweiligen Durchschalteprüfwort vom Multiplexer M in die Schmalbandsignallücken des Breitbandsignals eingefügt werden. Solche Meldebits können z.B. einen Ausfall der Lichtwellenleiter-Anschlußleitung (AL), eine erhöhte Bitfehlerhäufigkeit des auf der Lichtwellenleiter-Anschlußleitung (AL) übertragenen Signals und/oder des von der Breitbandkoppeleinrichtung BKF durchgeschalteten Signals oder auch, wie dies auch in der Zeichnung angedeutet ist, das Vergleichsergebnis eines Vergleichers V anzeigen, welcher die Übereinstimmung der eigenen Adresse des Anschlusses und der von dem Gegenanschluß reflektierten Adresse prüft. Bei einer bilateralen Verbindung über die Koppeleinrichtung, an der nur der gerade betrachtete Anschluß und der Gegenanschluß teilhaben, müssen diese beiden Adressen übereinstimmen.

Wenn diese Adressen nicht übereinstimmen, liegt entweder ein besonderer Betriebsfall vor oder ein Fehlerfall. Besondere Betriebsfälle sind beispielsweise folgende: Der Gegenanschluß sendet an mehrere weitere Anschlüsse das gleiche Breitbandsignal aus, empfängt aber nicht alle Breitbandsignale, die diese Anschlüsse in die Breitband-Koppeleinrichtung senden; diese Betriebsart wird auch mit Rundsenden bezeichnet. Ein anderer besonderer Betriebsfall besteht darin, daß der Anschluß nicht mit einem Gegenanschluß verbunden ist, sondern mit einem an die Koppeleinrichtung angeschalteten Breitbandsignalgenerator, der ein breitbandiges Freizeichensignal in die Koppeleinrichtung sendet, aber kein Breitbandsignal aus der Koppeleinrichtung empfängt.

Aus dem Vergleichsergebnis des Vergleichers V entnimmt der Vermittlungsprozessor, ob sich der betreffende Anschluß mit einem Gegenanschluß in bilateraler Verbindung befindet; dies erspart es dem Vermittlungsprozessor, auch das Durchschalteprüfsignal des Gegenanschlusses abzufragen, was die Zeit für die Durchschalteprüfung verkürzt.

## Patentansprüche

1. Verfahren zur Durchschalteprüfung einer Breitband-Koppeleinrichtung unter verbindungsindividuellem eingangsseitigen Einspeisen und ausgangsseitigen Auswerten eines eine den Koppeleinrichtungs-Eingang bezeichnende Adresse enthaltenden Prüfsignals, **dadurch gekennzeichnet**, daß in einem diensteintegrierenden Telekommunikationssystem mit getrennten Koppeleinrichtungen (SKF, BKF) für Schmalband- und für Breitbanddienste in jeder an einer Breitbandverbindung beteiligten Anschlußschaltung (BLT) Durchschalteprüfsignale, die jeweils die Adresse eben dieser Anschlußschaltung (BLT A) sowie die in von der Gegenseite her empfangenen entsprechenden Durchschalteprüfsignalen etwa enthaltene Adresse der Gegen-Anschlußschaltung (BLT B) enthalten, in die Schmalbandsignallücken des Breitbandsignals eingefügt werden und daß die über die Breitband-Koppeleinrichtung (BKF) durchvermittelte Breitbandsignale einzeln auch zu einem ebenfalls an die Breitband-Koppeleinrichtung (BKF) angeschlossenen Prüfanschluß (PA) durchgeschaltet werden, der den Breitbandsignalen jeweils das darin enthaltene Durchschalteprüfsignal entnimmt und an einen die Richtigkeit der bestehenden Verbindung durch Vergleich der Adresse von Anschlußschaltung (BLT A) und Gegen-Anschlußschaltung (BLT B) mit der Koppelfeld-Einstellung feststellenden Vermittlungsprozessor (SP) weiterleitet.

2. Verfahren nach Anspruch 1, **dadurch gekennzeichnet**, daß mit den Durchschalteprüfsignalen zusätzliche Meldebits zum Prüfanschluß (PA) übertragen werden.

3. Verfahren nach Anspruch 2, **dadurch gekennzeichnet**, daß als Meldebit das Ausgangssignal eines die Adresse des eigenen Anschlusses mit der von dem Gegenanschluß reflektierten Adresse vergleichenden Vergleichers (V) übertragen wird.

## Claims

1. Method for connection-testing a broad-band switching network with a connection-individual, input-end feeding-in of a test signal, containing an address designating the switching network input, and output-end evaluating thereof, characterised in that, in an integrated services telecommunication system with separate switching devices (SKF, BKF) for narrow-band and for broad-band services in each access circuit (BLT) involved in a broad-band connection, connection test signals which in each case contain the address of exactly this access circuit (BLT A) and the address of the distant access circuit (BLT B) which may be contained in corresponding connection test signals received from the distant side, are inserted into the narrow-band signal gaps of the broad-band signal and that the broad-band signals switched through via the broad-band switching network (BKF) are individually also switched through to a test connection (PA) also connected to the broad-band switching network (BKF), which test connection removes from the broad-band signals in each case the connection test signal contained therein and passes it on to a switching processor (SP) which determines the correctness of the existing connection by comparing the address of the access circuit (BLT A) and distant access circuit (BLT B) with the switching matrix setting.

2. Method according to Claim 1, characterised in that, together with the connection test signals, additional signalling bits are transmitted to the test connection (PA).

3. Method according to Claim 2, characterised in that the output signal of a comparator (V) comparing the address of the own access with the address reflected from the distant access is transmitted as signalling bit.

**Revendications**

1. Procédé de contrôle d'interconnexion dans un dispositif de couplage à large bande au moyen de l'injection côté entrée et de l'évaluation côté sortie, d'une manière prévue individuellement pour chaque liaison, d'un signal de contrôle contenant une adresse caractérisant l'entrée du dispositif de couplage, caractérisé par le fait que dans un système de télécommunications à intégration des services, comportant des dispositifs de couplage séparés (SKF, BKF) pour des services à bande étroite et pour des services à large bande, dans chaque circuit de raccordement (BLT) participant à une liaison à large bande, on insère, dans les intervalles vides à bande étroite du signal à large bande, des signaux de contrôle d'interconnexion, qui contiennent respectivement l'adresse précisément de ce circuit de raccordement (BLT A) ainsi que l'adresse du circuit de raccordement opposé (BLT B), contenue éventuellement dans des signaux de contrôle d'interconnexion correspondants, reçus en provenance du côté opposé, et que les signaux à large bande, transmis par l'intermédiaire du dispositif de couplage à large bande (BKF), sont également transmis directement, individuellement, à un circuit de contrôle (PA), qui est également raccordé au dispositif de couplage à large bande (BKF), prélève dans les signaux à large bande respectivement le signal de contrôle d'interconnexion contenu dans ces signaux et le retransmet à un processeur de commutation (SP) déterminant le caractère correct de la liaison existante au moyen d'une comparaison de l'adresse du circuit de raccordement (BLC A) et du circuit opposé de raccordement (BLT B), au réglage du champ de couplage.

2. Procédé suivant la revendication 1, caractérisé par le fait que des bits supplémentaires de signalisation sont transmis, conjointement avec les signaux de contrôle d'interconnexion, au circuit de contrôle (PA).

3. Procédé selon la revendication 2, caractérisé en ce que le signal de sortie d'un comparateur (V) comparant l'adresse du circuit particulier de raccordement à l'adresse réfléchie par le circuit opposé de raccordement, est transmis en tant que bit de signalisation.